# EUROPEAN PATENT SPECIFICATION

(11) **EP 4 582 327 B1**
(45) Date of publication and mention of the grant of the patent: **05.08.2026**
(21) Application number: 23935901.1
(22) Date of filing: 21.11.2023
(51) Int. Cl.: H04L 12/40, B61L 15/00

(54) **BIDIRECTIONAL SIGNAL MODE CONVERSION FOR MULTIFUNCTION VEHICLE BUS (MVB)**
BIDIREKTIONALE SIGNALMODUSUMWANDLUNG FÜR MULTIFUNKTIONSFAHRZEUGBUS (MVB)
CONVERSION DE MODE DE SIGNAL BIDIRECTIONNEL POUR BUS DE VÉHICULE MULTIFONCTION (MVB)

(30) Priority: 10.11.2023 CN 202311496998
(43) Date of publication of application: 09.07.2025
(73) Proprietor: CRSC RESEARCH & DESIGN INSTITUTE GROUP CO., LTD., Fengtai District Beijing 100070 (CN)
(72) Inventor: Jin, Xu, 100070 Beijing (CN); Gong, Jingshuang, 100070 Beijing (CN); Ma, Pan, 100070 Beijing (CN); Wu, Fangda, 100070 Beijing (CN); Lin, Ziming, 100070 Beijing (CN)
(74) Representative: Haseltine Lake Kempner LLP
(86) International application number: PCT/CN2023/132877
(87) International publication number: WO 2025/097489

(56) References cited:
- CN-A- 102 437 837
- CN-A- 103 033 714
- CN-A- 105 429 837
- CN-A- 106 817 287
- CN-A- 107 248 945
- CN-U- 201 754 588
- CN-Y- 2 930 120
- US-A1- 2020 269 889
- US-A1- 2020 287 971

## Description

This application claims priority of Chinese Patent Application No. 202311496998.4, filed on November 10, 2023, which is also published as CN117261966A.

### TECHNICAL FIELD

The present invention relates to the technical field of train communication, and more particularly, to a method, apparatus, device and storage medium for converting signal modes.

### BACKGROUND

A MVB (Multifunction Vehicle Bus) is a multifunction vehicle bus that connects fixed devices within a vehicle cabin. The transmission media of the physical layer of MVB may include three types: 1) ESD (Electrical Short Distance, a short distance transmission bus) media, typically used for short distance transmission, e.g. 20 meters; 2) EMD (Electrical Middle Distance, a middle distance transmission bus) medium, typically used for middle distance transmission, e.g. 200 meters; 3) OGF (optical glass fiber) media, typically used for long distance transmission, such as 2 kilometers.

Any of the above three transmission media may connect a plurality of MVB devices to form a bus segment in the MVB. EMD is most widely used based on the length of the on-track vehicle. Typically, the control of the transmission and reception of the MVB is implemented by using chips or modules. However, there is a problem in that the chip or module of the MVB only supports the transmission and reception of signals in the ESD mode and does not support the transmission and reception of signals in the EMD mode. When a chip or module supporting only the ESD mode is directly connected to the MVB, there occurs a problem that neither the received signal nor the transmitted signal can be recognized.

CN103033714 A describes a detecting device for a vehicle-mounted bus adapter.

### SUMMARY

The present invention provides a method, apparatus, device and storage medium of converting signal mode, to solve the problem that chip or module of MVB does not support transmission and reception of signal of EMD mode. The present invention is defined in the appended independent claims to which reference should be made. Advantageous features are set out in the appended dependent claims.

The present invention provides a scheme for converting a signal mode, receiving a short distance transmission bus ESD enable signal and extending an enable time of the ESD enable signal to obtain a middle distance enable signal, setting an ESD message signal to a first preset signal and a second preset signal in sequence after the ESD enable signal fails, to obtain a middle distance message signal, wherein the first preset signal and the second preset signal are each determined based on a characteristic of an end identification signal of a middle distance transmission bus EMD message signal, the middle distance message signal is used for outputting to a multifunction vehicle bus MVB, the middle distance enable signal is used for controlling the outputting of the middle distance message signal to the MVB, receiving a EMD message signal, determining a signal to be eliminated in a current EMD message signal using a first end identification signal of a last EMD message signal and a message characteristic in the current EMD message signal, and obtaining a short distance message signal by eliminating the signal to be eliminated, wherein, the signal to be eliminated is a signal in a second end identification signal of the current EMD message signal, which is consistent with the second preset signal, the short distance message signal is used for outputting to the MVB module in an ESD mode. By adopting the above technical solution, the converted ESD enable signal has the characteristics of the EMD enable signal, the ESD message signal has the characteristics of the EMD message signal by extending the signal enable time and modifying the message tail frame signal, and the ESD message signal can be obtained after eliminating the signal to be eliminated by determining the signal to be eliminated in the current EMD message using the end identification signal of a last EMD message signal. Thus, bidirectional conversion of signal in ESD mode and signal in EMD mode can be achieved.

### BRIEF DESCRIPTION OF DRAWINGS

FIG. 1 is a flowchart illustrating a method of converting signal modes according to a first embodiment of the present invention;
FIG. 2 is a schematic diagram illustrating an EMD signal and an ESD signal conversion process according to the first embodiment of the present invention;
FIG. 3 is a schematic diagram illustrating jumps of a state machine according to the first embodiment of the present invention;
FIG. 4 is a flowchart illustrating a method of converting signal modes according to a second embodiment of the present invention;
FIG. 5 is a timing diagram of a transmission process according to the second embodiment of the present invention;
FIG. 6 is a timing diagram of a reception process according to the second embodiment of the present invention;
Fig. 7 is a block diagram of an apparatus for converting a signal mode according to a third embodiment of the present invention;
FIG. 8 is a structural diagram of an electronic device according to a fourth embodiment of the present invention.

### DETAILED DESCRIPTION

It is noted that the terms "first", "second" and the like in the description and claims of the present invention as well as in the drawings described above, are used for distinguishing between similar objects and not necessarily for describing a particular sequential or chronological order. It is to be understood that such use of data may be interchanged under appropriate circumstances such that the embodiments of the invention described herein are capable of being practiced in sequences other than those illustrated or described herein. In the description of the present invention, unless otherwise specified, "a plurality of" means two or more. "And/Or", describing an association relationship of an associated object, means that three kinds of relationships may exist, for example, A and/or B may mean that: A alone exists, A and B exist at the same time, and B alone exists. The character "/" generally indicates that the contextual object is an "OR" relationship. Furthermore, the terms "comprising" and "including" and any variations thereof, are intended to cover a non-exclusive inclusion, such that, for example, a process, method, system, article, or apparatus that comprises a list of steps or elements is not necessarily limited to those steps or elements expressly listed but may include other steps or elements not expressly listed or inherent to such process, method, article, or apparatus.

The data coding rule for MVB described in IEC61375-3-1 is Manchester coding, and if the transmission rate of MVB is 1.5 Mbps (megabits per second), the transmission duration of 1 bit is 666.7 nanoseconds. The frame signal on MVB is mainly divided into three parts: header, frame data and tail. The frame signal on the MVB can be divided into a master frame and a slave frame by frame type differentiation. Structurally, the main difference between master and slave frames is in the shape of the delimiter in the header. "Null symbols" typically occur at the header of the frame and at the tail of the frame, with the tail of the frame typically serving as a flag to distinguish between ESD signals and EMD signals. For an ESD signal, an "null symbol" (i.e., an end identification signal) NL appears at the tail of the frame, i.e., a one-bit low level signal. For the EMD signal, the "null symbols" NL and NH appear at the tail of the frame, i.e., one bit of low level signal followed by one bit of high level signal. Thus, a chip or module that supports only ESD signals cannot issue or resolve EMD signals.

### The first embodiment

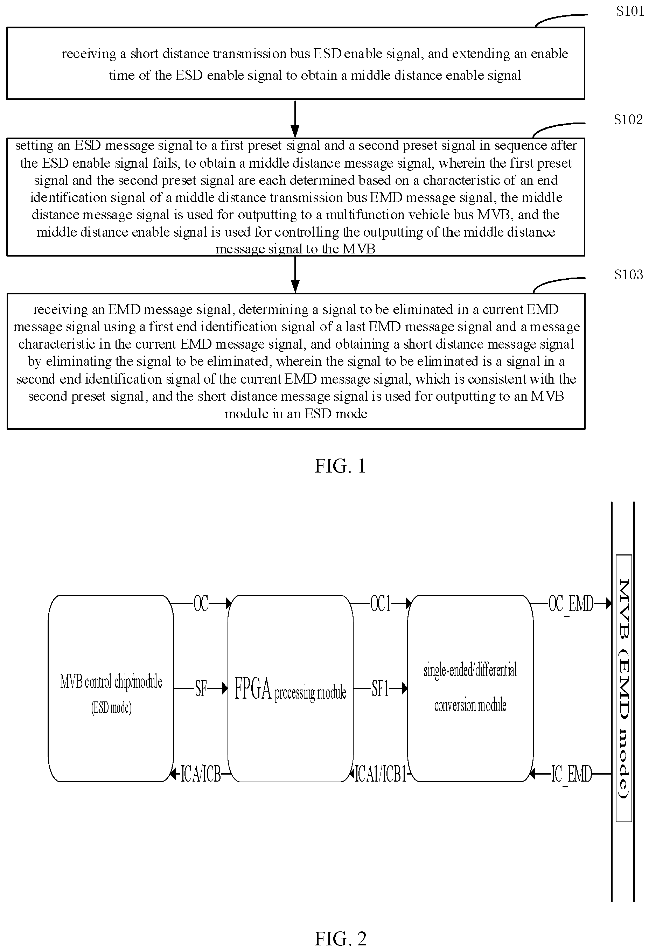

FIG. 1 is a flowchart illustrating a method for converting signal modes according to an embodiment of the present invention. The embodiment is applicable to the case of converting signal modes. The method may be performed by an apparatus for converting signal modes. The apparatus for converting signal modes may be implemented in hardware and/or software. The apparatus for converting signal modes may be provided in an electronic device. The electronic device may be formed of two or more physical entities or may be formed of one physical entity.

As shown in FIG. 1, according to the first embodiment of the present invention, a method for converting a signal mode comprises the steps of:
S 101, receiving a short distance transmission bus ESD enable signal, and extending an enable time of the ESD enable signal to obtain a middle distance enable signal.

FIG. 2 is a schematic diagram of an EMD signal and an ESD signal conversion process. In this embodiment, as shown in FIG. 2, when the ESD signals (i.e., the signals OC and SF from the MVB control chip/module on the left side) are converted into the EMD signal (the signal OC _ EMD to MVB on the right side), it's required to process at least the SF signal and the OC signal, wherein the SF signal is an ESD enable signal and the OC signal is an ESD message signal. As for the ESD enable signal, the tail frame of the ESD enable signal is generally a low level signal since it is a signal transmitted in the ESD mode, but the tail frame of the EMD signal is generally a one-bit low level signal and a one-bit high level signal, so that one more bit of the low level signal and one more bit of the high level signal can be transmitted when converting the EMD signal into the ESD signal. Therefore, there is a need to extend the enable time of the ESD enable signal by at least the period of time of the transmission of a 2-bit character. The Field Programmable Gate Array (FPGA) processing module in FIG. 2 is the module that implements the method of converting a signal pattern herein, the single-ended/differential conversion module may perform single-ended-to-differential operation and differential-to-single-ended operation on the signal.

S102, setting an ESD message signal to a first preset signal and a second preset signal in sequence after the ESD enable signal fails to obtain a middle distance message signal, wherein the first preset signal and the second preset signal are each determined based on a characteristic of an end identification signal of a middle distance transmission bus EMD message signal, the middle distance message signal is used for outputting to a multi-function vehicle bus MVB, and the middle distance enable signal is used for controlling outputting of the middle distance message signal to the MVB.

In this embodiment, since the end identification signal of the EMD message signal described above is characterized by a low level signal followed by a high level signal, the processing of the ESD message signal can be divided into two operations. After the ESD enable signal fails, the ESD message signal is first set to a low level signal, i.e., a first preset signal, and then set to a high level signal, i.e., a second preset signal, to obtain OC1 (i.e., a middle distance message signal) in FIG. 2. The duration of the first preset signal and the duration of the second preset signal may both be the transmission period of time of 1-bit character, and the output of the middle distance message signal to the MVB is started only after the middle distance enable signal is enabled.

S103, receiving an EMD message signal, determining a signal to be eliminated in a current EMD message signal using a first end identification signal of a last EMD message signal and a message characteristic in the current EMD message signal, and obtaining a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode.

In the present embodiment, as shown in FIG. 2, when converting an EMD signal (i.e., the signal IC_EMD output from the MVB on the right side) to an ESD signal (the signal ICA/ICB input to the MVB control chip/module on the left side), the start_bit of the EMD message signal (i.e., the start bit identification signal) is typically one high level signal and one low level signal. However, the header of an EMD message signal is susceptible to various effects. For example, a chip or module in an ESD mode typically needs to trigger a decision whether a new EMD message signal is coming through a low-to-high rising edge before determining whether a start_bit is present. However, since the tail of the frame of the EMD signal is usually a high level signal, the high level signal fluctuates in the MVB for a long time, and the single-ended value obtained after the single-ended differential conversion is often uncertain. That is, the EMD message signal preceding the start _bit may be a high level signal or a low level signal. Therefore, as for the determination of the start_bit, the arrival of the signal cannot be determined only based on the falling edge. The (first) end identification signals of the last EMD message signal, i.e. a one-bit low level signal and a one-bit high level signal, may be determined first, and then the arrival of the signal may be determined according to the falling edge following the high level signal, wherein the signal occurring after the falling edge is determined as the start_bit in the current EMD message signal. Then, after the start_bit of the current EMD message signal is determined, if a signal that meets the abnormal message characteristics appears in the current EMD message signal, the signal may be discarded, and when a falling edge is detected again, the signal occurring after the falling edge may be determined as the start_bit in the current EMD message signal. After determining the start_bit, the end identification signal in the current EMD message signal can be determined based on the characteristics of the current EMD message signal. As can be appreciated from the above-described characteristics of the end-identification signal of the ESD message signal, there is no high level signal in the end-identification signal of the EMD message signal, so that the signal to be eliminated in the current EMD message signal is a high level signal in the second end-identification signal, i.e., a signal consisting with the second preset signal. As shown in Fig. 2, the ESD message signal ICA/ICB, i.e., the short distance message signal, is obtained after the signal to be eliminated in the EMD message signal ICA1/ICB1 is eliminated, wherein ICA1 and ICA are master frames, and ICB1 and ICB are slave frames. As shown in FIG. 2, short distance message signals may be used for outputting to a MVB (control) module or MVB (control) chip where both the transmitted and received signals are ESD signals.

The embodiment of the present invention provides a method of converting signal modes, receiving a short distance transmission bus ESD enable signal and extending an enable time of the ESD enable signal to obtain a middle distance enable signal, setting an ESD message signal to a first preset signal and a second preset signal in sequence after the ESD enable signal fails, to obtain a middle distance message signal, wherein the first preset signal and the second preset signal are each determined based on a characteristic of an end identification signal of a middle distance transmission bus EMD message signal, the middle distance message signal is used for outputting to a multi-function vehicle bus MVB, the middle distance enable signal is used for controlling outputting of the middle distance message signal to the MVB, receiving an EMD message signal, determining a signal to be eliminated in a current EMD message signal using a first end identification signal of a last EMD message signal and a message characteristic in the current EMD message signal, and obtaining a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode. The embodiment of the present invention achieves bidirectional conversion of signal in ESD mode and signal in EMD mode by the following method: making the converted ESD enable signal having the characteristics of the EMD enable signal, the ESD message signal having the characteristics of the EMD message signal by extending the signal enable time and modifying the message tail frame signal; and obtaining the ESD message signal after eliminating the signal to be eliminated by determining the signal to be eliminated in the current EMD message using the end identification signal of a last EMD message signal.

Optionally, before said setting the ESD message signal to the first preset signal and the second preset signal in sequence, further comprises: performing a sampling operation on the original ESD message signal at intervals of a first preset period duration to obtain a sampled signal; maintaining each of the sampled signals for a second preset period duration to obtain an ESD message signal. The advantage of this arrangement is that the waveform integrity of the ESD message signal is guaranteed by sampling plus reshaping the waveform.

In particular, since MVB requires both the width and time of variation of the data waveform, if the original ESD message signal is directly sampled and output, it may result in deviations or even distortions in the waveform shape of the output ESD message signal. Therefore, the original ESD message signal may be pre-processed by sampling plus reshaping the waveform, i.e. sampling the waveform of the original ESD message signal once every half period (first preset period duration) to obtain a sampled signal, and obtaining the ESD message signal by holding each sampled signal for a half-period duration (i.e., a second preset period duration).

Optionally, said determining a signal to be eliminated in a current EMD message signal using a first end identification signal of a last EMD message signal and a message characteristic in the current EMD message signal comprises: determining a signal occurring after the first end identification signal of the last EMD message signal as a first start bit identification signal, wherein the first start bit identification signal is a start bit identification signal in the current EMD message signal; updating the first start bit identification signal with a target signal occurring after an abnormal signal and consisting with a preset message signal if it is determined that the current EMD message signal contains the abnormal signal meeting a preset abnormal characteristic, wherein the preset message signal is determined based on a characteristic of an end identification signal of the EMD message signal; determining a second end identification signal using the updated first start bit identification signal, and determining a signal in the second end identification signals, which consists with the second preset signal, as the signal to be eliminated. The advantage of this arrangement is that the accuracy of the determination of the start bit identification signal in the current EMD message signal can be improved by using the first end identification signal of the last EMD message signal. If an abnormal signal occurs in the current EMD message signal, the start bit identification signal in the current EMD message signal can be quickly determined by identifying a target signal which occurs after the abnormal signal and which consists with the preset message signal.

Optionally, obtaining a short distance message signal by eliminating the signal to be eliminated comprises: replacing the signal to be eliminated with the first preset signal to obtain a short distance message signal, wherein an output time of the short distance message signal is delayed by at least a first preset period of time than a reception time of the current EMD message signal, wherein the first preset period of time is longer than a period of time corresponding to the second preset signal. The advantage of this arrangement is that the conversion of the EMD message signal is achieved by replacing the signal to be eliminated by a first preset signal meeting the characteristics of the end signal of the ESD.

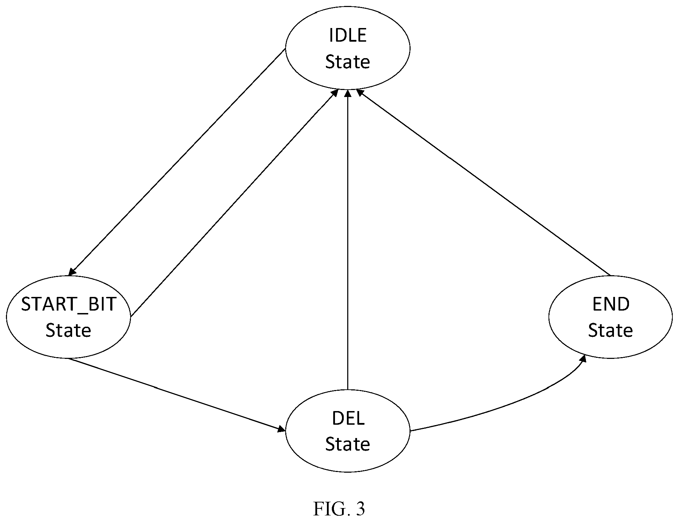

For example, FIG. 3 is a jumping schematic diagram of a state machine. As shown in FIG. 3, the signal to be eliminated in the current EMD message signal can be eliminated by using a preset state machine, which may be built into the FPGA processing module of FIG. 2. The jumping process of the state machine of the FPGA processing module of FIG. 2 is as follows:
1) IDLE state, i.e., an initial state and a state of determining whether a data frame is received.
   What this state does is primarily to wait for the falling edge of IC1 (i.e., ICA1 or ICB1) to come, the IC output by the state is a low level signal (i.e., ICA or ICB), and jumps to START_BIT state if a falling edge of IC1 is received. If a current EMD message signal is an EMD message signal received at a first time, the falling edge of said IC1 is a falling edge after a rising edge, the monitoring of the IDLE state for the falling edge can resolve the uncertainty of the level before the start_bit, and the low level signal output by the FPGA processing module in the IDLE state.
2) START_BIT state, i.e., receiving START_BIT state.
   What this state does primarily is to wait for the arrival of the rising edge of IC1. In general, START_BIT has a range of widths to wait for the rising edge of IC1 to come within a specified time range. If a rising edge occurs within a specified time range and the current state is maintained for a preset period of time, e.g., greater than or equal to 166.7 nanoseconds and less than or equal to 447.9 nanosecond, then it is determined that a new frame of data arrives and the DEL state is entered, otherwise the received signal is considered to be a glitch and can be directly filtered out, and not output, and the IDLE state is entered, which solves the problem that the width of start_bit fluctuates greatly. The output IC of the FPGA processing module in this state is a low level signal.
3) DEL state, i.e., delimiter determining state.
   This state is primarily the determination of the validity of the delimiter signal. Since the characteristics of the delimiter signal of the master frame and the slave frame of the EMD message signal are widely different and the common part is almost absent, the determination can be made based on the characteristics of the preceding and following frames of the delimiter signal. In general, in the delimiter signals of the master frame and the slave frame, the longest maintain period of time of the continuous high level signal and the continuous low level signal does not exceed the transmission period of time of 1.5 bits, i.e., in the normal delimiter signal, the continuous high level signal of more than 1.5 bits length is not present and/or the continuous low level signal of more than 1.5 bits length is not present. The preset length threshold may be determined to be 1.875 bits in consideration of a case of sampling jitter as well as signal jitter. If a continuous high level signal or/or a continuous low level signal exceeding the preset length threshold is present in the delimiter signal, it may be determined that a delimiter error is present, no subsequent output is performed, and it can return to the IDLE state. When the timing length of the DEL state is greater than or equal to a threshold of a preset period of time, such as an 8-bit transmission period of time, and no errors occur, then it can jump to the END state. The transmission period of time of 1.5 bits indicates the period of time used to transmit 1.5 bits, the output IC of the FPGA processing module in the DEL state is IC1 delayed by a preset time, e.g., the transmission period of time of 1.25 bits.
4) END state, i.e., waiting for the end of frame state.

The END state will continuously detect whether the end identification signal is present, since the delimiter frame part has passed, the signal received in the END state will change with high-low level, and it will enter the IDLE state upon detection of the end identification signal or an excessively long continuous low-level signal and/or an excessively long high level signal, such as a continuous low-level signal and/or an excessively long high level signal exceeding the transmission duration of 1.875 bits. The FPGA processing module in the END state outputs IC1 delayed by the 1.25-bit transmission period of time.

In particular, when the state machine normally jumps from the END state to the IDLE state, the IDLE state may be used to wait for the arrival of a falling edge to enter the START_BIT state, i.e. to determine the signal occurring after the first end identification signal of the last EMD message signal as the first start bit identification signal. When the state machine abnormally jumps from any one of the START_BIT state, the DEL state, and the END state to the IDLE state, i.e., it is determined that the current EMD message signal contains an abnormal signal meeting a preset abnormal characteristic, the IDLE state is used to wait for the arrival of a falling edge and determining whether a target signal consisting with the preset message signal is present, so as to enter the START_BIT state, i.e., the first start bit identification signal is updated by using the target signal appears after the abnormal signal and is consistent with the preset message signal. The process of replacing the signal to be eliminated with the first preset signal to obtain the short distance message signal is the jumping process of the END state and the IDLE state described above.

It should be noted that during the operation of the state machine, the state machine indicates that the IC output by the FPGA processing module is the IC1 delayed by the transmission period of time of 1.25 bits (i.e., the first preset period of time). Thus, when determining whether the end identification signal appears in the END state and the last high level signal of the IC1 is not yet output, i.e., the high level signal in the END identification signals, it will enter the IDLE state from the END state. In the IDLE state, a low level signal is output instead of continuing to output IC1, thereby realizing a filtering of the high level signal in the end identification signal, i.e. realizing a replacement of the signal to be eliminated by the first preset signal to obtain the short distance message signal.

### The second embodiment

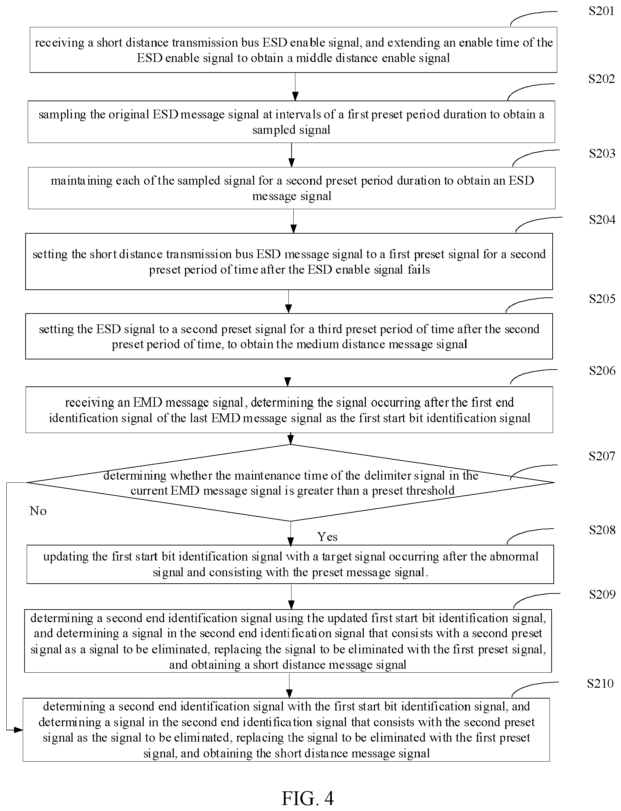

Fig. 4 is a flow chart of a method for converting signal modes according to the second embodiment of the present invention. The technical solution of the embodiment of the present invention is further optimized on the basis of the above-mentioned alternative technical solutions, and a specific manner of converting signal modes is provided.

Optionally, before said determining that the current EMD message signal contains an abnormal signal meeting a preset abnormal characteristic, further comprises: determining whether a maintenance time of a delimiter signal in the current EMD message signal is greater than a preset threshold; wherein said determining that the current EMD message signal contains an abnormal signal meeting a preset abnormal characteristic comprises: determining that the current EMD message signal contains an abnormal signal meeting a preset abnormal characteristic if the maintenance time is greater than the preset threshold. The advantage of this arrangement is that by determining the maintenance time of the delimiter signal, it is possible to quickly determine whether a delimiter error has occurred.

Optionally, said setting an ESD message signal to a first preset signal and a second preset signal in sequence after the ESD enable signal fails, to obtain a middle distance message signal comprises: setting a short distance transmission bus ESD message signal to a first preset signal for a second preset period of time after the ESD enable signal fails; and setting the ESD signal to a second preset signal for a third preset period of time after the second preset period of time to obtain a middle distance message signal. The advantage of this arrangement is that by setting the duration of the first preset signal and the second preset signal, it is further ensured that the characteristics of the obtained middle distance message signal are consist with the characteristics of the EMD signal.

As shown in FIG. 4, according to the second embodiment of the present invention, a method for converting a signal mode comprises the steps of:
S201, receiving a short distance transmission bus ESD enable signal, and extending an enable time of the ESD enable signal to obtain a middle distance enable signal.

Optionally, extending an enable time of the ESD enable signal to obtain a middle distance enable signal comprises extending the enable time of the ESD enable signal by a fourth preset period of time to obtain the middle distance enable signal, wherein the fourth preset period of time is greater than a sum of the second preset period of time and the third preset period of time. The advantage of this arrangement is that by setting the fourth preset period of time, a situation in which the enable time of the middle distance enable signal is insufficient due to delay is avoided.

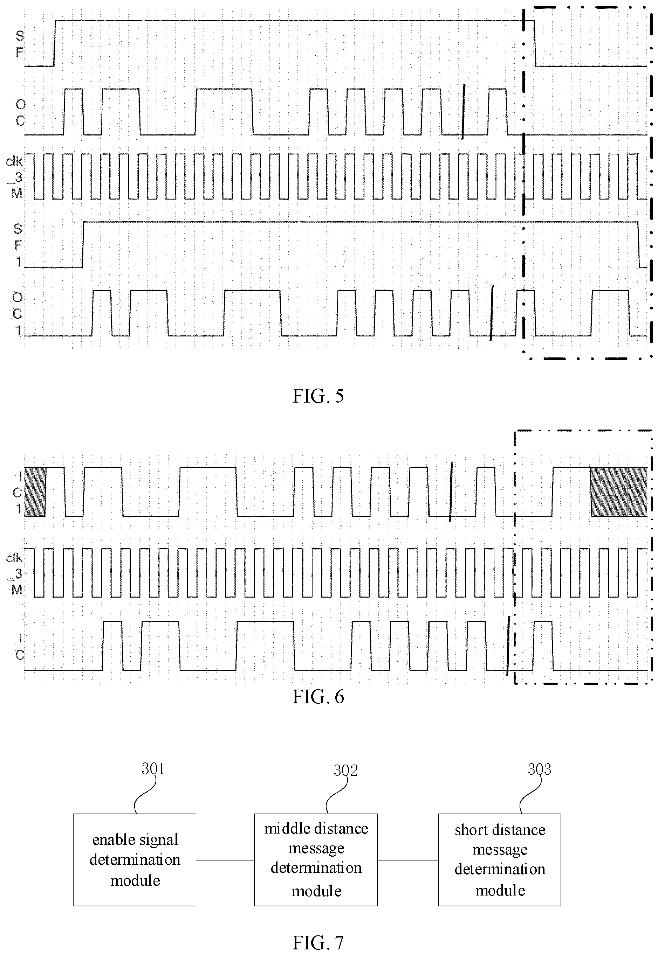

Illustratively, FIG. 5 is a timing diagram of a transmission process in which SF is the ESD enable signal, OC is the original ESD message signal, clk_3M is the clock signal, SF1 is the middle distance enable signal, and OC1 is the middle distance message signal. If the second preset period of time and the third preset period of time are each a transmission period of time of a 1-bit character, as shown in the dashed area in FIG. 5, considering a delay, the total extension time of the enable time of the ESD enable signal may be a period of time corresponding to the sum of the delay time and the transmission period of time for transmitting the 2-bit character (i.e., the sum of the second preset period of time and the third preset period of time). The second preset period of time is a period of time during which the preset short distance transmission bus ESD message signal is set to the first preset signal, and the third preset period of time is a period of time during which the short distance transmission bus ESD message signal is set to the second preset signal.

S202, sampling the original ESD message signal at intervals of a first preset period duration to obtain a sampled signal.

S203, maintaining each of the sampled signal for a second preset period duration to obtain an ESD message signal.

S204, setting the short distance transmission bus ESD message signal to a first preset signal for a second preset period of time after the ESD enable signal fails.

Exemplarily, as indicated by the dashed area in Fig. 5, if the second preset period of time is the transmission period of time of the 1-bit character and the first preset signal is the low level signal, the ESD message signal is set to the low level signal during the transmission period of time of the 1-bit character after the ESD enable signal fails.

S205. setting the ESD signal to a second preset signal for a third preset period of time after the second preset period of time, to obtain the medium distance message signal.

Exemplarily, as indicated by the dashed area in Fig. 5, if the third preset period of time is the transmission period of time of the 1-bit character and the second preset signal is the high level signal, the ESD signal is set to the high level signal for the transmission period of time of the 1-bit character after the transmission period of time of the 1-bit character, to obtain the middle distance message signal.

S206, receiving an EMD message signal, determining the signal occurring after the first end identification signal of the last EMD message signal as the first start bit identification signal.

S207, determining whether the maintenance time of the delimiter signal in the current EMD message signal is greater than a preset threshold, if yes, executing step 208, if no, executing step 210.

Specifically, as described above, the DEL state of the state machine may be used to determine whether the maintenance time of the delimiter signal following the first start bit identification signal is too large, i.e., greater than a preset threshold, and if so, enter the IDLE state, i.e., execute step 208, and if not, enter the END state, i.e., execute step 210. The preset threshold may be 1.875 bit transmission period of time.

S208, updating the first start bit identification signal with a target signal occurring after the abnormal signal and consisting with the preset message signal.

In particular, if the maintenance time of the delimiter signal in the current EMD message signal is greater than a preset threshold value, the state machine described above may jump from the DEL state to the IDLE state and then jump to the START_BIT state in which the redetermined START_BIT is the updated first start bit identification signal. The preset message signal may be a falling edge signal in the IDLE state.

S209, determining a second end identification signal using the updated first start bit identification signal, and determining a signal in the second end identification signal that consists with a second preset signal as a signal to be eliminated, replacing the signal to be eliminated with the first preset signal, and obtaining a short distance message signal.

S210, determining a second end identification signal with the first start bit identification signal, and determining a signal in the second end identification signal that consists with the second preset signal as the signal to be eliminated, replacing the signal to be eliminated with the first preset signal, and obtaining the short distance message signal.

The method for converting signal modes provided by the embodiment of the present invention can quickly determine whether a delimiter error occurs by determining the maintenance time of the delimiter signal, and further guarantee that the characteristics of the obtained middle distance message signal are consistent with the characteristics of the EMD signal by setting the durations of the first preset signal and the second preset signal, and achieve the conversion of the EMD message signal.

### The third embodiment

Fig. 7 is a block diagram of an apparatus for converting signal modes according to the third embodiment of the present invention. As shown in FIG. 7, the apparatus comprises: an enable signal determination module 301, a middle distance message determination module 302, and a short distance message determination module 303, wherein:
the enable signal determination module is configured for receiving a short distance transmission bus ESD enable signal, and extending an enable time of the ESD enable signal to obtain a middle distance enable signal;
a middle distance message determination module, is configured for setting an ESD message signal to a first preset signal and a second preset signal in sequence after the ESD enable signal fails, to obtain a middle distance message signal, wherein the first preset signal and the second preset signal are each determined based on a characteristic of an end identification signal of a middle distance transmission bus EMD message signal, the middle distance message signal is used for outputting to a multi-function vehicle bus MVB, and the middle distance enable signal is used for controlling outputting of the middle distance message signal to the MVB;
a short distance message determination module, is configured for receiving an EMD message signal, determining a signal to be eliminated in a current EMD message signal using a first end identification signal of a last EMD message signal and a message characteristic in the current EMD message signal, and obtain a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode.

An embodiment of the present invention provides an apparatus for converting signal modes, which achieves bidirectional conversion of signal in ESD mode and signal in EMD mode by the following method: making the converted ESD enable signal having the characteristics of the EMD enable signal, the ESD message signal having the characteristics of the EMD message signal by extending the signal enable time and modifying the message tail frame signal; and obtaining the ESD message signal after eliminating the signal to be eliminated by determining the signal to be eliminated in the current EMD message using the end identification signal of a last EMD message signal.

Optionally, the apparatus further comprises:
a sampled signal determination module, configured for performing a sampling operation on the original ESD message signal at intervals of a first preset period duration to obtain a samped signal before said setting the ESD message signal to the first preset signal and the second preset signal in sequence;
a message determination module, configured for maintaining each of the sampled signals for a second preset period duration to obtain an ESD message signal.

Optionally, the short distance message determination module comprises:
an identification signal determination unit, configured for determining a signal occurring after a first end identification signal of a last EMD message signal as a first start bit identification signal, wherein the first start bit identification signal is a start bit identification signal in a current EMD message signal;
an updating unit configured for updating the first start bit identification signal with a target signal occurring after an abnormal signal and consisting with a preset message signal, if it is determined that the abnormal signal meeting a preset abnormal characteristic is contained in a current EMD message signal, wherein the preset message signal is determined based on a characteristic of an end identification signal of the EMD message signal;
a signal-to-be-eliminated determination unit configured for determining a second end identification signal using the updated first start bit identification signal, and determining a signal in the second end identification signals, which consists with the second preset signal, as the signal to be eliminated.

Optionally, the short distance message determination module comprises:
a signal replacing unit, configured for replacing the signal to be eliminated with the first preset signal to obtain a short distance message signal, wherein an output time of the short distance message signal is delayed by at least a first preset period of time than a reception time of the current EMD message signal, wherein the first preset period of time is longer than a period of time corresponding to the second preset signal.

Optionally, the short distance message determination module further comprises:
a determination unit, configured for determining whether a maintenance time of a delimiter signal in the current EMD message signal is greater than a preset threshold before determining that an abnormal signal meeting a preset abnormal characteristic is present in the current EMD message signal.

Optionally, said determining that an abnormal signal meeting a preset abnormal characteristic is present in the current EMD message signal includes determining that an abnormal signal meeting a preset abnormal characteristic is present in the current EMD message signal if the maintenance time is greater than the preset threshold.

Optionally, the middle distance message determination module comprises:
a signal converting unit for setting a short distance transmission bus ESD message signal to a first preset signal for a second preset period of time after the ESD enable signal fails; and
a middle distance message determination unit for setting the ESD signal to a second preset signal for a third preset period of time after the second preset period of time has elapsed to obtain a middle distance message signal.

Optionally, the enable signal determination module comprises:
an enable signal determination unit, configured for extending an enable time of the ESD enable signal by a fourth preset period of time to obtain a middle distance enable signal, wherein the fourth preset period of time is greater than a sum of the second preset period of time and the third preset period of time.

The apparatus for converting signal modes according to the embodiments of the present invention may perform the method for converting signal modes according to any of the embodiments of the present invention, and may have corresponding functional blocks and advantageous effects according to the method.

### The fourth embodiment

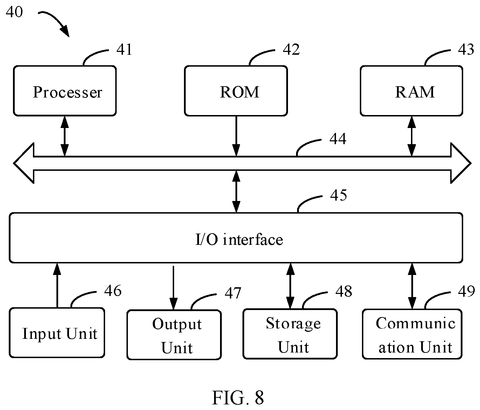

FIG. 8 shows a block diagram of an electronic device 40 that may be used to implement an embodiment of the present invention. The electronic devices are intended to represent various forms of digital computers, such as laptops, desktops, workstations, personal digital assistants, servers, blade servers, mainframes, and other appropriate computers. The electronic device may also represent various forms of mobile devices, such as personal digital processing, cellular telephones, smart phones, wearable devices (e.g., helmets, glasses, watches, etc.), and other similar computing devices. The components shown here, their connections and relationships, and their functions, are by way of example only, and are not meant to limit implementations of the inventions described and/or claimed in this document.

As shown in FIG. 8, the electronic device 40 comprises at least one processor 41, and a memory, such as a read-only memory (ROM) 42, a random access memory (RAM) 43, etc., communicatively connected with the at least one processor 41, wherein the memory stores a computer program executable by the at least one processor, The processor 41 may perform various appropriate actions and processes in accordance with a computer program stored in a read only memory (ROM) 42 or loaded into a random access memory (RAM) 43 from a storage unit 48. In the RAM 43, various programs and data required for the operation of the electronic device 40 may also be stored. The processor 41, the ROM 42 and the RAM 43 are connected to each other by a bus 44. An input/output (I/O) interface 45 is also connected to the bus 44.

A number of components in the electronic device 40 are connected to the I/O interface 45, including: an input unit 46, such as a keyboard, a mouse, or the like; an output unit 47 such as various types of displays, speakers, and the like; a storage unit 48, e.g., magnetic disk, optical disk, etc.; and a communication unit 49, such as a network card, modem, wireless communications transceiver, or the like. The communication unit 49 allows the electronic device 40 to exchange information/data with other devices over a computer network such as the Internet and/or various telecommunication networks.

The processor 41 may be various general purpose and/or special purpose processing components with processing and computing capabilities. Some examples of the processor 41 include, but are not limited to, a central processing unit (CPU), a graphics processing unit (GPU), various specialized artificial intelligence (AI) computing chips, various processors running machine learning model algorithms, a digital signal processor (DSP), and any suitable processor, controller, microcontroller, or the like. The processor 41 performs the various methods and processes described above, such as the method of converting signal modes.

In some embodiments, the method of converting signal modes may be implemented as a computer program tangibly embodied in a computer readable storage medium, such as the storage unit 48. In some embodiments, part or all of the computer program may be loaded into and/or installed onto the electronic device 40 via the ROM 42 and/or the communication unit 49. One or more steps of the method of converting a signal mode described hereinabove may be performed when the computer program is loaded into the RAM 43 and executed by the processor 41. Alternatively, in other embodiments, the processor 41 may be configured in any other suitable way, e.g. by means of firmware, to perform the method of converting the signal mode.

Various implementations of the systems and techniques described above can be realized in digital electronic circuitry, integrated circuitry, field programmable gate arrays (FPGA), application specific integrated circuits (ASIC), application specific standard products (ASSP), system-on-a-chip systems (SOC), load programmable logic devices (CPLD), computer hardware, firmware, software, and/or combinations thereof. These various implementations can include implementation in one or more computer programs that are executable and/or interpretable on a programmable system including at least one programmable processor, which may be special or general purpose, that may receive data and instructions from, and to transmit data and instructions to, a storage system, at least one input device, and at least one output device.

Computer programs for carrying out methods of the present invention may be written in any combination of one or more programming languages. These computer programs may be provided to a processor of a general purpose computer, special purpose computer, or other programmable data processing apparatus, such that the computer programs, when executed by the processor, cause the functions/operations specified in the flowcharts and/or block diagrams to be implemented. The computer program may execute entirely on the machine, partly on the machine, partly on the machine and partly on a remote machine as a stand-alone software package or entirely on the remote machine or server.

The computer device provided above can be used to perform the method of converting signal modes provided by any of the embodiments described above, with corresponding functions and advantageous effects.

### The fifth embodiment

In the context of the present invention, a computer-readable storage medium may be a tangible medium which, when executed by a computer processor, is configured to perform a method of converting signal modes, the method comprising:
receiving a short distance transmission bus ESD enable signal, and extending an enable time of the ESD enable signal to obtain a middle distance enable signal;
setting an ESD message signal to a first preset signal and a second preset signal in sequence after the ESD enable signal fails, to obtain a middle distance message signal, wherein the first preset signal and the second preset signal are each determined based on a characteristic of an end identification signal of a middle distance transmission bus EMD message signal, the middle distance message signal is used for outputting to a multifunction vehicle bus MVB, and the middle distance enable signal is used for controlling the outputting of the middle distance message signal to the MVB;
receiving an EMD message signal, determining a signal to be eliminated in a current EMD message signal using a first end identification signal of a last EMD message signal and a message characteristic in the current EMD message signal, and obtaining a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode.

In the context of the present invention, a computer readable storage medium may be a tangible medium that can contain, or store a computer program for use by or in connection with an instruction execution system, apparatus, or device. A computer readable storage medium may include, but is not limited to, an electronic, magnetic, optical, electromagnetic, infrared, or semiconductor system, apparatus, or device, or any suitable combination of the foregoing. Alternatively, the computer readable storage medium may be a machine readable signal medium. More specific examples of the machine readable storage medium would include an electrical connection based on one or more wires, a portable computer diskette, a hard disk, a random access memory (RAM), a read-only memory (ROM), an erasable programmable read-only memory (EPROM or Flash memory), an optical fiber, a convenient compact disc read-only memory (CD-ROM), an optical storage device, a magnetic storage device, or any suitable combination of the foregoing.

The computer device provided above can be used to perform the method of converting signal modes provided by any of the embodiments described above, with corresponding functions and advantageous effects.

## Claims

1. A method of converting signal modes performed by a processor, the method comprises:
receiving (S101) an Electrical Short Distance, ESD, enable signal, and extending an enable time of the ESD enable signal to obtain a middle distance enable signal;
setting (S102) an ESD message signal to a first preset signal and a second preset signal in sequence after the ESD enable signal fails, to obtain a middle distance message signal, wherein the first preset signal and the second preset signal are each determined based on a characteristic of an end identification signal of an Electrical Middle Distance, EMD, message signal, the middle distance message signal is used for outputting to a multifunction vehicle bus MVB, and the middle distance enable signal is used for controlling the outputting of the middle distance message signal to the MVB;
receiving (S103) an EMD message signal, determining a signal to be eliminated in a current EMD message signal using a first end identification signal of a last EMD message signal and a message characteristic in the current EMD message signal, and obtaining a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode.

2. The method of claim 1, **characterized in that**, before said setting the ESD message signal to the first preset signal and the second preset signal in sequence, further comprises:
performing a sampling operation on an original ESD message signal at intervals of a first preset period duration to obtain a sampled signal;
maintaining each of the sampled signals for a second preset period duration to obtain an ESD message signal.

3. The method of claim 1, **characterized in that**, said determining a signal to be eliminated in a current EMD message signal using a first end identification signal of a last EMD message signal and a message characteristic in the current EMD message signal, comprises:
determining a signal occurring after the first end identification signal of the last EMD message signal as a first start bit identification signal, wherein the first start bit identification signal is a start bit identification signal in the current EMD message signal;
updating the first start bit identification signal with a target signal occurring after an abnormal signal and consisting with a preset message signal if it is determined that the current EMD message signal contains the abnormal signal meeting a preset abnormal characteristic, wherein the preset message signal is determined based on a characteristic of an end identification signal of the EMD message signal;
determining a second end identification signal using the updated first start bit identification signal, and determining a signal in the second end identification signals, which consists with the second preset signal, as the signal to be eliminated.

4. The method according to claim 1, **characterized in that**, said obtaining a short distance message signal by eliminating the signal to be eliminated comprises, comprises:
replacing the signal to be eliminated with the first preset signal to obtain a short distance message signal, wherein an output time of the short distance message signal is delayed by at least a first preset period of time than a reception time of the current EMD message signal, wherein the first preset period of time is longer than a period of time corresponding to the second preset signal.

5. The method according to claim 3, **characterized in that**, before said determining that the current EMD message signal contains an abnormal signal meeting a preset abnormal characteristic, further comprises:
determining whether a maintenance time of a delimiter signal in the current EMD message signal is greater than a preset threshold;
wherein said determining that the current EMD message signal contains an abnormal signal meeting a preset abnormal characteristic comprises:
determining that the current EMD message signal contains an abnormal signal meeting a preset abnormal characteristic if the maintenance time is greater than the preset threshold.

6. The method of claim 1, **characterized in that**, said setting an ESD message signal to a first preset signal and a second preset signal in sequence after the ESD enable signal fails, to obtain a middle distance message signal, comprises:
setting an ESD message signal to a first preset signal for a second preset period of time after the ESD enable signal fails; and
setting the ESD message signal to a second preset signal for a third preset period of time after the second preset period of time to obtain a middle distance message signal.

7. The method of claim 6, **characterized in that**, said extending an enable time of the ESD enable signal to obtain a middle distance enable signal comprises:
extending the enable time of the ESD enable signal by a fourth preset period of time to obtain the middle distance enable signal, wherein the fourth preset period of time is greater than a sum of the second preset period of time and the third preset period of time.

8. An apparatus for converting signal modes, the apparatus comprises:
an enable signal determination module (301) for receiving an Electrical Short Distance, ESD, enable signal, and extending an enable time of the ESD enable signal to obtain a middle distance enable signal;
a middle distance message determination module (302) for setting an ESD message signal to a first preset signal and a second preset signal in sequence after the ESD enable signal fails, to obtain a middle distance message signal, wherein the first preset signal and the second preset signal are each determined based on a characteristic of an end identification signal of an Electrical Middle Distance, EMD, message signal, the middle distance message signal is used for outputting to a multifunction vehicle bus MVB, and the middle distance enable signal is used for controlling outputting of the middle distance message signal to the MVB;
a short distance message determination module (303) for receiving an EMD message signal, determining a signal to be eliminated in a current EMD message signal using a first end identification signal of a last EMD message signal and a message characteristic in the current EMD message signal, and obtain a short distance message signal by eliminating the signal to be eliminated, wherein the signal to be eliminated is a signal in a second end identification signal of the current EMD message signal, which is consistent with the second preset signal, and the short distance message signal is used for outputting to an MVB module in an ESD mode.

9. An electronic device (40) that comprises:
at least one processor (41); and
a memory communicatively connected with the at least one processor; wherein,
the memory stores a computer program executable by the at least one processor, the computer program being executed by the at least one processor to cause the at least one processor to perform the method of converting signal modes of any one of claims 1-7.

10. A computer-readable storage medium has stored thereon computer instructions for causing a processor to execute all the steps of the method of converting signal modes of any one of claims 1-7.

## Patentansprüche

1. Verfahren zum Umwandeln von Signalmodi, das durch einen Prozessor durchgeführt wird, wobei das Verfahren Folgendes umfasst:
Empfangen (S101) eines elektrischen Kurzdistanz(ESD)-Freigabesignals und Verlängern einer Freigabezeit des ESD-Freigabesignals, um ein Mitteldistanz-Freigabesignal zu erhalten;
Einstellen (S102) eines ESD-Nachrichtensignals auf ein erstes voreingestelltes Signal und ein zweites voreingestelltes Signal in Folge, nachdem das ESD-Freigabesignal ausfällt, um ein Mitteldistanz-Nachrichtensignal zu erhalten, wobei das erste voreingestellte Signal und das zweite voreingestellte Signal jeweils basierend auf einem Merkmal eines Endidentifikationssignals eines elektrischen Mitteldistanz(EMD)-Nachrichtensignals bestimmt werden, das Mitteldistanz-Nachrichtensignal zum Ausgeben an einen Multifunktionsfahrzeugbus, MVB, verwendet wird und das Mitteldistanz-Freigabesignal zum Steuern des Ausgebens des Mitteldistanz-Nachrichtensignals an den MVB verwendet wird;
Empfangen (S103) eines EMD-Nachrichtensignals, Bestimmen eines zu eliminierenden Signals in einem aktuellen EMD-Nachrichtensignal unter Verwendung eines ersten Endidentifikationssignals eines letzten EMD-Nachrichtensignals und eines Nachrichtenmerkmals in dem aktuellen EMD-Nachrichtensignal und Erhalten eines Kurzdistanz-Nachrichtensignals durch Eliminieren des zu eliminierenden Signals, wobei das zu eliminierende Signal ein Signal in einem zweiten Endidentifikationssignal des aktuellen EMD-Nachrichtensignals ist, das mit dem zweiten voreingestellten Signal in Übereinstimmung steht, und das Kurzdistanz-Nachrichtensignal zum Ausgeben an ein MVB-Modul in einem ESD-Modus verwendet wird.

2. Verfahren nach Anspruch 1, **dadurch gekennzeichnet, dass** es vor dem Einstellen des ESD-Nachrichtensignals auf das erste voreingestellte Signal und das zweite voreingestellte Signal in Folge ferner Folgendes umfasst:
Durchführen eines Abtastvorgangs an einem ursprünglichen ESD-Nachrichtensignal in Intervallen einer ersten voreingestellten Periodendauer, um ein abgetastetes Signal zu erhalten;
Beibehalten jedes der abgetasteten Signale für eine zweite voreingestellte Periodendauer, um ein ESD-Nachrichtensignal zu erhalten.

3. Verfahren nach Anspruch 1, **dadurch gekennzeichnet, dass** das Bestimmen eines zu eliminierenden Signals in einem aktuellen EMD-Nachrichtensignal unter Verwendung eines ersten Endidentifikationssignals eines letzten EMD-Nachrichtensignals und eines Nachrichtenmerkmals in dem aktuellen EMD-Nachrichtensignal Folgendes umfasst:
Bestimmen eines Signals, das nach dem ersten Endidentifikationssignal des letzten EMD-Nachrichtensignals auftritt, als ein erstes Startbit-Identifikationssignal, wobei das erste Startbit-Identifikationssignal ein Startbit-Identifikationssignal in dem aktuellen EMD-Nachrichtensignal ist;
Aktualisieren des ersten Startbit-Identifikationssignals mit einem Zielsignal, das nach einem anormalen Signal auftritt und mit einem voreingestellten Nachrichtensignal übereinstimmt, wenn bestimmt wird, dass das aktuelle EMD-Nachrichtensignal das anormale Signal, das ein voreingestelltes anormales Merkmal erfüllt, enthält, wobei das voreingestellte Nachrichtensignal basierend auf einem Merkmal eines Endidentifikationssignals des EMD-Nachrichtensignals bestimmt wird;
Bestimmen eines zweiten Endidentifikationssignals unter Verwendung des aktualisierten ersten Startbit-Identifikationssignals und Bestimmen eines Signals, das mit dem zweiten voreingestellten Signal übereinstimmt, in den zweiten Endidentifikationssignalen als das zu eliminierende Signal.

4. Verfahren nach Anspruch 1, **dadurch gekennzeichnet, dass** das Erhalten eines Kurzdistanz-Nachrichtensignals durch Eliminieren des zu eliminierenden Signals Folgendes umfasst:
Ersetzen des zu eliminierenden Signals durch das erste voreingestellte Signal, um ein Kurzdistanz-Nachrichtensignal zu erhalten, wobei eine Ausgabezeit des Kurzdistanz-Nachrichtensignals um mindestens eine erste voreingestellte Zeitperiode gegenüber einer Empfangszeit des aktuellen EMD-Nachrichtensignals verzögert ist, wobei die erste voreingestellte Zeitperiode länger als eine dem zweiten voreingestellten Signal entsprechende Zeitperiode ist.

5. Verfahren nach Anspruch 3, **dadurch gekennzeichnet, dass** es vor dem Bestimmen, dass das aktuelle EMD-Nachrichtensignal ein anormales Signal enthält, das ein voreingestelltes anormales Merkmal erfüllt, ferner Folgendes umfasst:
Bestimmen, ob eine Beibehaltungszeit eines Begrenzungssignals in dem aktuellen EMD-Nachrichtensignal größer als ein voreingestellter Schwellenwert ist;
wobei das Bestimmen, dass das aktuelle EMD-Nachrichtensignal ein anormales Signal enthält, das ein voreingestelltes anormales Merkmal erfüllt, Folgendes umfasst:
Bestimmen, dass das aktuelle EMD-Nachrichtensignal ein anormales Signal enthält, das ein voreingestelltes anormales Merkmal erfüllt, wenn die Beibehaltungszeit größer als der voreingestellte Schwellenwert ist.

6. Verfahren nach Anspruch 1, **dadurch gekennzeichnet, dass** das Einstellen eines ESD-Nachrichtensignals auf ein erstes voreingestelltes Signal und ein zweites voreingestelltes Signal in Folge, nachdem das ESD-Freigabesignal ausfällt, um ein Mitteldistanz-Nachrichtensignal zu erhalten, Folgendes umfasst:
Einstellen eines ESD-Nachrichtensignals auf ein erstes voreingestelltes Signal für eine zweite voreingestellte Zeitperiode, nachdem das ESD-Freigabesignal ausfällt; und
Einstellen des ESD-Nachrichtensignals auf ein zweites voreingestelltes Signal für eine dritte voreingestellte Zeitperiode nach der zweiten voreingestellten Zeitperiode, um ein Mitteldistanz-Nachrichtensignal zu erhalten.

7. Verfahren nach Anspruch 6, **dadurch gekennzeichnet, dass** das Verlängern einer Freigabezeit des ESD-Freigabesignals, um ein Mitteldistanz-Freigabesignal zu erhalten, Folgendes umfasst:
Verlängern der Freigabezeit des ESD-Freigabesignals um eine vierte voreingestellte Zeitperiode, um das Mitteldistanz-Freigabesignal zu erhalten, wobei die vierte voreingestellte Zeitperiode größer als eine Summe der zweiten voreingestellten Zeitperiode und der dritten voreingestellten Zeitperiode ist.

8. Einrichtung zum Umwandeln von Signalmodi, wobei die Einrichtung Folgendes umfasst:
ein Freigabesignal-Bestimmungsmodul (301) zum Empfangen eines elektrischen Kurzdistanz(ESD)-Freigabesignals und Verlängern einer Freigabezeit des ESD-Freigabesignals, um ein Mitteldistanz-Freigabesignal zu erhalten;
ein Mitteldistanz-Nachrichtenbestimmungsmodul (302) zum Einstellen eines ESD-Nachrichtensignals auf ein erstes voreingestelltes Signal und ein zweites voreingestelltes Signal in Folge, nachdem das ESD-Freigabesignal ausfällt, um ein Mitteldistanz-Nachrichtensignal zu erhalten, wobei das erste voreingestellte Signal und das zweite voreingestellte Signal jeweils basierend auf einem Merkmal eines Endidentifikationssignals eines elektrischen Mitteldistanz(EMD)-Nachrichtensignals bestimmt werden, das Mitteldistanz-Nachrichtensignal zum Ausgeben an einen Multifunktionsfahrzeugbus, MVB, verwendet wird und das Mitteldistanz-Freigabesignal zum Steuern eines Ausgebens des Mitteldistanz-Nachrichtensignals an den MVB verwendet wird;
ein Kurzdistanz-Nachrichtenbestimmungsmodul (303) zum Empfangen eines EMD-Nachrichtensignals, Bestimmen eines zu eliminierenden Signals in einem aktuellen EMD-Nachrichtensignal unter Verwendung eines ersten Endidentifikationssignals eines letzten EMD-Nachrichtensignals und eines Nachrichtenmerkmals in dem aktuellen EMD-Nachrichtensignal und Erhalten eines Kurzdistanz-Nachrichtensignals durch Eliminieren des zu eliminierenden Signals, wobei das zu eliminierende Signal ein Signal in einem zweiten Endidentifikationssignal des aktuellen EMD-Nachrichtensignals ist, das mit dem zweiten voreingestellten Signal in Übereinstimmung steht, und das Kurzdistanz-Nachrichtensignal zum Ausgeben an ein MVB-Modul in einem ESD-Modus verwendet wird.

9. Elektronische Vorrichtung (40), die Folgendes umfasst:
mindestens einen Prozessor (41); und
einen Speicher, der kommunikativ mit dem mindestens einen Prozessor verbunden ist; wobei,
der Speicher ein Computerprogramm speichert, das durch den mindestens einen Prozessor ausführbar ist, wobei das Computerprogramm durch den mindestens einen Prozessor ausgeführt wird, um den mindestens einen Prozessor dazu zu veranlassen, das Verfahren zum Umwandeln von Signalmodi nach einem der Ansprüche 1-7 durchzuführen.

10. Computerlesbares Speichermedium weist darauf gespeicherte Computeranweisungen zum Veranlassen eines Prozessors auf, alle Schritte des Verfahrens zum Umwandeln von Signalmodi nach einem der Ansprüche 1-7 auszuführen.

## Revendications

1. Procédé de conversion de modes de signal mis en œuvre par un processeur, le procédé comprenant :
la réception (S101) d'un signal d'activation à courte distance électrique (ESD) et l'extension d'un temps d'activation du signal d'activation ESD pour obtenir un signal d'activation à distance moyenne ;
le réglage (S102) d'un signal de message ESD sur un premier signal prédéfini et un second signal prédéfini dans cet ordre après la défaillance du signal d'activation ESD, pour obtenir un signal de message à distance moyenne, dans lequel chacun du premier signal prédéfini et du second signal prédéfini est déterminé sur la base d'une caractéristique d'un signal d'identification de fin d'un signal de message à distance moyenne électrique (EMD), le signal de message à distance moyenne est utilisé pour une sortie vers un bus de véhicule multifonction (MVB), et le signal d'activation à distance moyenne est utilisé pour la commande de la sortie du signal de message à distance moyenne vers le MVB ;
la réception (S103) d'un signal de message EMD, la détermination d'un signal à éliminer dans un signal de message EMD actuel à l'aide d'un premier signal d'identification de fin d'un dernier signal de message EMD et d'une caractéristique de message dans le signal de message EMD actuel, et l'obtention d'un signal de message à courte distance en éliminant le signal à éliminer, dans lequel le signal à éliminer est un signal dans un second signal d'identification de fin du signal de message EMD actuel, qui concorde avec le second signal prédéfini, et le signal de message à courte distance est utilisé pour la sortie vers un module MVB en mode ESD.

2. Procédé selon la revendication 1, **caractérisé en ce que**, avant ledit réglage du signal de message ESD sur le premier signal prédéfini et le second signal prédéfini dans cet ordre, celui-ci comprend en outre :
la mise en œuvre d'une opération d'échantillonnage sur un signal de message ESD d'origine à intervalles donnés d'une première période prédéfinie pour obtenir un signal échantillonné ;
le maintien de chacun des signaux échantillonnés pendant une deuxième période prédéfinie pour obtenir un signal de message ESD.

3. Procédé selon la revendication 1, **caractérisé en ce que** ladite détermination d'un signal à éliminer dans un signal de message EMD actuel, à l'aide d'un premier signal d'identification de fin d'un dernier signal de message EMD et d'une caractéristique de message dans le signal de message EMD actuel, comprend :
la détermination d'un signal survenant après le premier signal d'identification de fin du dernier signal de message EMD comme premier signal d'identification de bit de début, dans lequel le premier signal d'identification de bit de début est un signal d'identification de bit de début dans le signal de message EMD actuel ;
la mise à jour du premier signal d'identification de bit de début avec un signal cible survenant après un signal anormal et correspondant à un signal de message prédéfini s'il est déterminé que le signal de message EMD actuel contient le signal anormal répondant à une caractéristique anormale prédéfinie, dans lequel le signal de message prédéfini est déterminé sur la base d'une caractéristique d'un signal d'identification de fin du signal de message EMD ;
la détermination d'un second signal d'identification de fin à l'aide du premier signal d'identification de bit de début mis à jour, et la détermination d'un signal dans les seconds signaux d'identification de fin, qui correspond au second signal prédéfini, comme signal à éliminer.

4. Procédé selon la revendication 1, **caractérisé en ce que** ladite obtention d'un signal de message à courte distance par l'élimination du signal à éliminer comprend :
le remplacement du signal à éliminer par le premier signal prédéfini pour obtenir un signal de message à courte distance, dans lequel un temps de sortie du signal de message à courte distance est retardé d'au moins une première période prédéfinie par rapport à un temps de réception du signal de message EMD actuel, dans lequel la première période prédéfinie est plus longue que la période correspondant au second signal prédéfini.

5. Procédé selon la revendication 3, **caractérisé en ce que**, avant ladite détermination que le signal de message EMD actuel contient un signal anormal répondant à une caractéristique anormale prédéfinie, celui-ci comprend en outre :
la détermination si une durée de maintenance d'un signal de délimiteur dans le signal de message EMD actuel est supérieure à un seuil prédéfini ;
dans lequel la détermination que le signal de message EMD actuel contient un signal anormal répondant à une caractéristique anormale prédéfinie comprend :
la détermination que le signal de message EMD actuel contient un signal anormal répondant à une caractéristique anormale prédéfinie si la durée de maintenance est supérieure au seuil prédéfini.

6. Procédé selon la revendication 1, **caractérisé en ce que**, après la défaillance du signal d'activation ESD, ledit réglage d'un signal de message ESD sur un premier signal prédéfini et un second signal prédéfini dans cet ordre, pour obtenir un signal de message à distance moyenne, comprend :
le réglage d'un signal de message ESD sur un premier signal prédéfini pendant une deuxième période prédéfinie après la défaillance du signal d'activation ESD ; et
le réglage du signal de message ESD sur un second signal prédéfini pendant une troisième période prédéfinie après la deuxième période prédéfinie pour obtenir un signal de message à distance moyenne.

7. Procédé selon la revendication 6, **caractérisé en ce que** ladite extension d'une durée d'activation du signal d'activation ESD pour obtenir un signal d'activation à distance moyenne comprend :
l'extension de la durée d'activation du signal d'activation ESD d'une quatrième période prédéfinie pour obtenir le signal d'activation à distance moyenne, dans lequel la quatrième période prédéfinie est supérieure à la somme de la deuxième période prédéfinie et de la troisième période prédéfinie.

8. Appareil de conversion de modes de signal, l'appareil comprenant :
un module de détermination de signal d'activation (301) pour la réception d'un signal d'activation à courte distance électrique (ESD) et l'extension d'un temps d'activation du signal d'activation ESD pour obtenir un signal d'activation à distance moyenne ;
un module de détermination de message à distance moyenne (302) pour le réglage d'un signal de message ESD sur un premier signal prédéfini et un second signal prédéfini dans cet ordre après la défaillance du signal d'activation ESD, pour obtenir un signal de message à distance moyenne, dans lequel chacun du premier signal prédéfini et du second signal prédéfini est déterminé sur la base d'une caractéristique d'un signal d'identification de fin d'un signal de message à distance moyenne électrique (EMD), le signal de message à distance moyenne est utilisé pour une sortie vers un bus de véhicule multifonction (MVB), et le signal d'activation à distance moyenne est utilisé pour la commande de la sortie du signal de message à distance moyenne vers le MVB ;
un module de détermination de message à courte distance (303) pour la réception d'un signal de message EMD, la détermination d'un signal à éliminer dans un signal de message EMD actuel à l'aide d'un premier signal d'identification de fin d'un dernier signal de message EMD et d'une caractéristique de message dans le signal de message EMD actuel, et l'obtention d'un signal de message à courte distance en éliminant le signal à éliminer, dans lequel le signal à éliminer est un signal dans un second signal d'identification de fin du signal de message EMD actuel, qui concorde avec le second signal prédéfini, et le signal de message à courte distance est utilisé pour la sortie vers un module MVB en mode ESD.

9. Dispositif électronique (40) qui comprend :
au moins un processeur (41) ; et
une mémoire connectée en communication avec l'au moins un processeur ; dans lequel,
la mémoire stocke un programme informatique exécutable par l'au moins un processeur, le programme informatique étant exécuté par l'au moins un processeur pour amener l'au moins un processeur à exécuter le procédé de conversion des modes de signal selon l'une quelconque des revendications 1 à 7.

10. Support de stockage lisible par ordinateur sur lequel sont stockées des instructions informatiques destinées à amener un processeur à exécuter l'ensemble des étapes du procédé de conversion des modes de signal selon l'une quelconque des revendications 1 à 7.
